# EUROPÄISCHE PATENTSCHRIFT

(11) **EP 1 399 330 B1**
(45) Veröffentlichungstag und Bekanntmachung des Hinweises auf die Patenterteilung: **27.10.2010**
(21) Anmeldenummer: 01949417.8
(22) Anmeldetag: 18.06.2001
(51) Int. Cl.: B60M 1/30

(54) **STROMSCHIENENSTOSSLASCHE**
CONDUCTOR RAIL FISH-PLATE
ECLISSE DE RAILS CONDUCTEURS

(43) Veröffentlichungstag der Anmeldung: 24.03.2004
(73) Patentinhaber: Furrer + Frey AG Ingenieurbüro, 3000 Bern 6 (CH)
(72) Erfinder: NÜNLIST, Felix, CH-3037 Herrenschwanden (CH); FURRER, Beat, CH-3012 Bern (CH)
(74) Vertreter: von Bülow, Tam
(86) Internationale Anmeldenummer: PCT/EP2001/006857
(87) Internationale Veröffentlichungsnummer: WO 2002/102617

(56) Entgegenhaltungen:
- JP-A- 10 181 390
- JP-A- 11 198 688
- US-A- 3 985 211
- DATABASE WPI Section PQ, Week 97 Derwent Publications Ltd., London, GB; Class Q14, AN 97-423483 XP002189945 & RU 2 073 764 C (KASYLKASOV), 20. Februar 1997 (1997-02-20)

## Beschreibung

Die Erfindung bezieht sich auf eine Stromschienenstoßlasche gemäß dem Oberbegriff des Patentanspruches 1.

Zunehmende Anforderungen an Fahrleitungssysteme bezüglich Sicherheit, Zuverläßigkeit, Strombelastbarkeit, Kurzschlußresistenz und minimale Bauhöhen führen zur Anwendung von Stromschienen, die einen zugkraftlos verlegten Fahrdraht halten. Bevorzugte Anwendungsgebiete sind Tunnels, aber auch Unterhaltswerkstätten für elektrische Triebfahrzeuge, um die arbeitsbehindernden Fahrleitungen zur Seite schwenken zu können.

Das Stromschienenprofil wird in der Regel in Längen von ca. 12 Meter gepreßt. Stromschienenanlagen setzen sich also aus aneinandergereihten Stromschienenprofilen zusammen, die mechanisch und elektrisch verbunden werden müssen. Die Verbindung erfordert einerseits die mechanische Festigkeit, die Erhaltung der Formschlüssigkeit und auch die Übertragungskapazität für elektrischen Strom, welcher in Stromspitzen bis zu 5000A erreichen kann. Die Formschlüssigkeit verlangt, daß unter Belastung des Eigengewichtes kein Knick am Stoß zweier aufeinanderfolgender Stromschienenprofile auftreten darf.

Der verformungsfreie Stoß zweier Stromschienenprofile wurde bisher mit zwei Laschen an der Innenseite der Stege der Stromschienenprofile erreicht. Diese Stoßlaschen müssen in die Hohlräume der Stromschiene eingeführt werden. Dann werden sie mit Schrauben von außen gegen die Profilstege gezogen. Die mechanische und formschlüssige Festigkeit wird durch keilförmige Flanken an den Stoßlaschen und die Gegenform im Profilinneren erreicht. Die elektrische Übertragung des Stromes erfolgt durch Linienkontakte zwischen den Stoßlaschen und den Steginnenseiten des Profiles. Die Linienkontakte werden durch den Druck des Anziehens der Schrauben erreicht.

Nachteilig an diesem bekannten Stromschienenstoß ist, daß zwei Laschen eingeführt werden müssen, in die Profilstege und die Laschen Löcher gebohrt und die entsprechende Anzahl von Schrauben angezogen werden müssen. In der Praxis werden je Lasche 16 Löcher bzw. sogar Gewindelöcher gebohrt und die Gewinde geschnitten. Der bekannte Stromschienenstoß ist daher nicht montagefreundlich. Er ist auch nicht praktisch, wenn ein Stromschienenabschnitt ausgetauscht werden muß, da der Zugang zum Hohlraum am Stromschienenprofil nur mit einem schlanken Gegenstand an der unteren Klemmöffnung für den Fahrdraht möglich ist. Der Stromübertragung sind durch die linienförmigen, nicht eindeutig definierten elektrischen Kontakte Grenzen gesetzt.

Aufgabe der Erfindung ist es, den bekannten Stromschienenstoß dahingehend zu verbessern, daß er einfach zu montieren ist, eine definierte Stromübertragung für hohe elektrische Ströme hat, eine hohe mechanische Festigkeit mindestens gleich der des bekannten Stromschienenprofils und eine Lösbarkeit bei Bedarf aufweist. Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, daß die Stromschienenstoßlasche aus zwei symmetrischen Profilhälften besteht, die das Stromschienenprofil von außen übergreifen und durch eine außerhalb des Querschnittprofils der Stromschiene gelegene Schraubverbindung an dem Stromschienenprofil befestigt sind und daß zwischen den Laschen und dem Stromschienenprofil zusätzlich Federkontaktlamellen angeordnet sind.

Im Stromschienenprofil müssen daher keine Löcher vorhanden sein. Dadurch, daß die Profilhälften von außen auf das Stromschienenprofil angebracht werden und dieses umgreifen, ist eine sehr einfache Montage erreichbar. Die mechanische Festigkeit wird durch die Vorspannung der beiden Profilhälften mit Schrauben erreicht. Durch die Kontaktlamellen erhält man unter der Vorspannung der Stromschienenstoßlaschen definierte Punktkontakte zwischen der Lasche und dem Stromschienenprofil. Die Profilstege des Stromschienenprofils werden in ihrer Elastizität nicht behindert, so daß auch ein Fahrdrahteinziehwagen das Profil ungehindert spreizen kann. Der Stromschienenstoß ist von außen leicht lösbar. Auch ist ein wiederholtes Lösen und Festmachen ohne weiteres möglich.

Im folgenden wird die Erfindung anhand eines Ausführungsbeispieles im Zusammenhang mit der Zeichnung ausführlicher erläutert. Es zeigt:
- Fig. 1: einen Querschnitt einer Stromschiene mit einer Stromschienenstoßlasche gemäß der Erfindung;

- Fig. 2: eine Seitenansicht von Stromschienenstoß und -lasche der Fig. 1;
- Fig. 3 und 4: Draufsichten und Querschnitte von Kontaktlamellen, die bei der Erfindung zur Anwendung kommen;

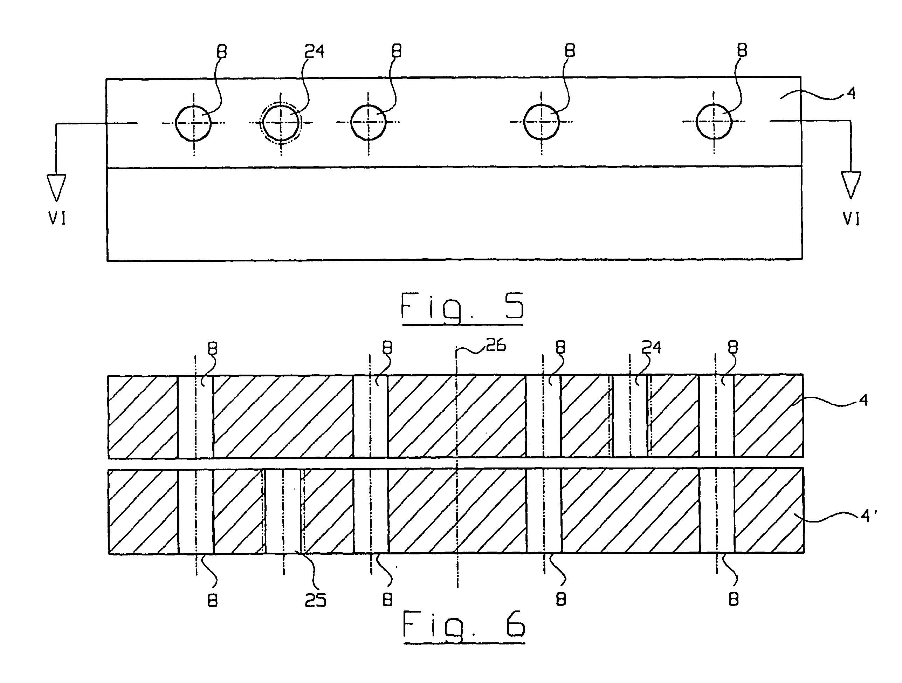

- Fig. 5: eine Seitenansicht einer Stromschienenstoßlasche; und
- Fig. 6: einen Schnitt längs der Linie VI-VI der Fig. 5.

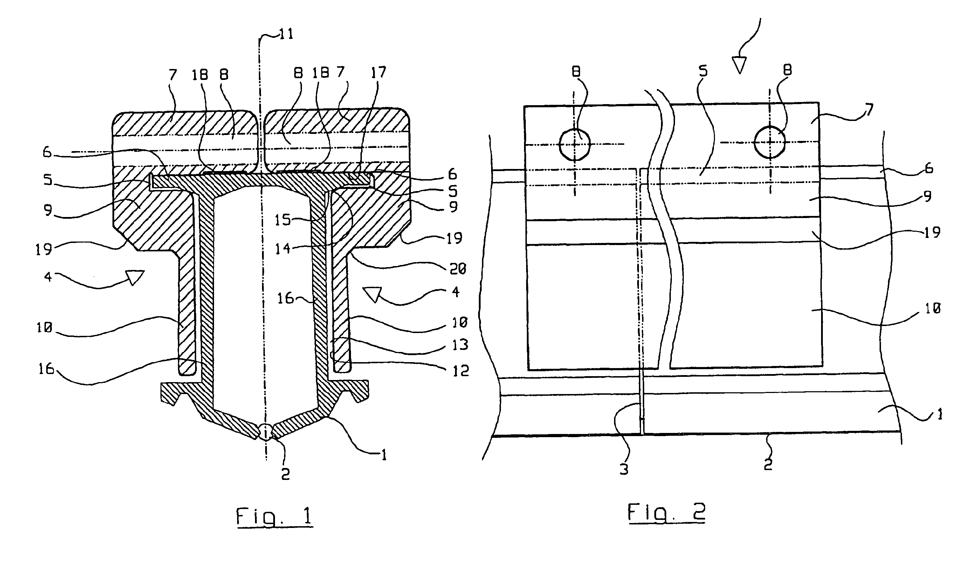

In Fig. 1 ist ein bekanntes Stromschienenprofil 1 zu sehen, das einen Fahrdraht 2 hält. Ein solches Stromschienenprofil ist beispielsweise aus der EP 0 828 629 A1 bekannt. An einem Stoß (3 in Fig. 2) zweier benachbarter Stromschienen sind zwei symmetrische Stromschienenstoßlaschen (im folgenden "Laschen" genannt) 4 angebracht, die stranggepreßt oder gefräst sind. Diese Laschen 4 umgreifen das Stromschienenprofil von außen und haben je eine Nut 5, in die ein oberer, horizontaler Steg 6 des Stromschienenprofils hineinragt. Jede Lasche 4 hat einen Kopf 7 mit einer Bohrung 8, einen Mittelteil 9 und einen unteren Steg 10, der sich an den Mittelteil 9 anschließt. Zwischen Kopf und Mittelteil befindet sich die genannte Nut 5. Der Kopf 7 übergreift das Stromschienenprofil 4 bis fast zu dessen Mitte 11, während die zum Stromschienenprofil 4 weisende Innenseite 12 des Mittelteils 9 und des Steges 10 nach außen versetzt sind und gegenüber dem Stromschienenprofil einen Abstand 13 aufweist, so daß es möglich ist, das Stromschienenprofil 1 aufzuweiten bzw. aufzubiegen, um den Fahrdraht 2 einzuführen. Der Steg 10 ist dabei plattenartig ausgebildet und dient dazu, in Längsrichtung der Stromschiene 1 die mechanische Biegesteifigkeit zu gewährleisten.

Der Übergangsbereich zwischen der Nut 5 und der Innenseite 12 ist mit einem Radius 14 versehen, der bei montierter Lasche gegen eine Schräge 15 der Stromschiene im Übergangsbereich zwischen deren horizontalem Steg 6 und vertikalem Steg 16 zur Anlage kommt und dort für eine Linienberührung sorgt. Werden die beiden symmetrischen Profilhälften 4 durch eine Schraube durch die Bohrung 8 hindurch gegeneinander verspannt, so werden die beiden Profilhälften 4 nicht nur gegeneinander gezogen, sondern aufgrund des Radius 14 in Verbindung mit der Schräge 15 auch mit der oberen, nach unten weisenden Fläche 17 des Kopfes 7 gegen die Oberseite des Stromschienenprofils 1 gedrückt. In der Fläche 17 haben die beiden Profilhälften je eine Ausnehmung, in welche je ein Satz von federnden Kontaktlamellen 18 eingesetzt ist. Durch das vertikale Verspannen der Profilhälften werden die Kontaktlamellen mit definierter Kraft gegen die Stromschiene 1 und die Profilhälften 4 gedrückt und zwar über die gesamte Länge der Profilhälften, so daß sich ein sehr guter Mehrfachkontakt ergibt, durch den der Stoß 3 überbrückt wird.

Im dargestellten Ausführungsbeispiel ist die horizontale Erstreckung der Nut 5 im Querschnitt der Fig. 1 länger als die des Steges 6, so daß die freien Ende der Stege im Grund der Nut 6 nicht zum Anschlag kommen. Hierdurch wird erreicht, daß der Radius 14 in Verbindung mit der Schräge 15 stets zum Einsatz kommt.

Der nach unten zum Fahrdraht 2 hin gerichtete Abschnitt des Mittelteiles 9 ist mit einer Fase 19 versehen. Weiter ist im Übergangsbereich zwischen dem Mittelteil 9 und dem Steg 10 eine Fase 20 angebracht. Im übrigen sind alle weiteren Kanten mit einem Radius versehen.

Die Länge der Laschen in Fahrtrichtung hängt von den gewünschten mechanischen und elektrischen Eigenschaften ab und beträgt in der Praxis je nach Stromübertragungskapazität zwischen 200 und 400 mm. Je nach Länge und mechanischer Festigkeit werden zwei bis vier Schrauben verwendet. Entsprechend ist die Anzahl der Bohrungen 8 im Kopfteil. Bei einem anderen Ausführungsbeispiel werden immer vier Schrauben verwendet, unabhängig von der Länge der Laschen.

In der Seitenansicht der Fig. 2 ist vor allem der Stoß 3 zwischen zwei benachbarten Stromschienenprofilen zu erkennen sowie auch, daß mehrere Bohrungen 8 vorhanden sind. Durch die gewählte mittlere Trennlinie ist angedeutet, daß die Länge der Profilhälften in Fahrtrichtung variiert werden kann.

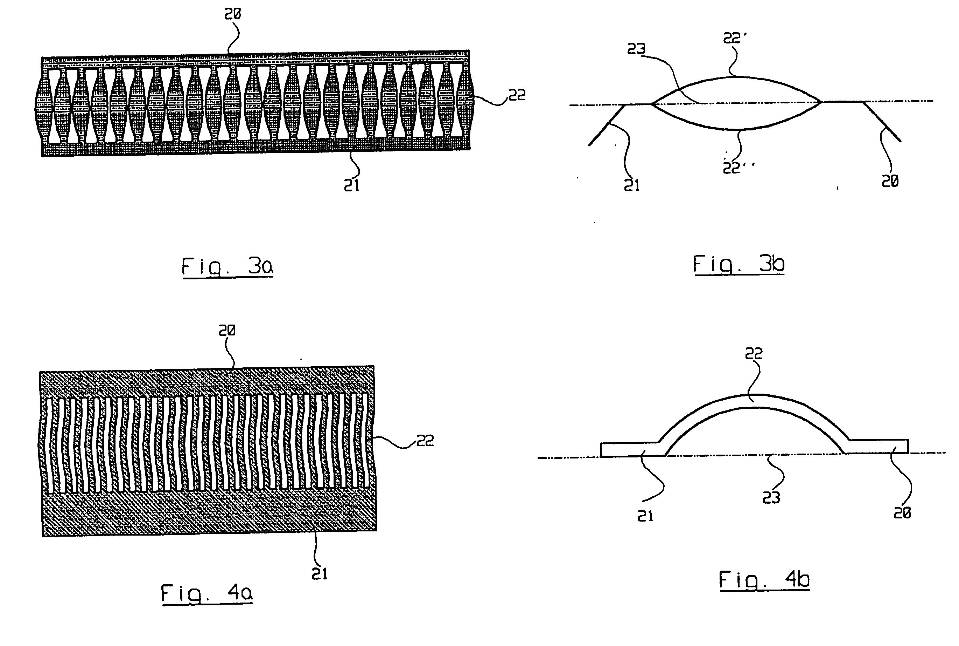

Die Fig. 3 und 4 zeigen zwei Varianten von Kontaktlamellen. Fig. 2a zeigt eine Draufsicht und Fig. 2b einen schematischen Querschnitt. Insgesamt haben die Kontaktlamellen zwei parallel verlaufende Verbindungsstege 20 und 21, zwischen denen eine Vielzahl von Federkontakten 22 angeordnet sind, die mit den beiden Stegen 20 und 21 verbunden sind. Die Kontakte 22 sind abwechselnd aus einer Mittelebene 23 herausgebogen. Auch können die beiden Stege 20 und 21 aus dieser Ebene 23 herausgebogen sein. Werden die Profilelemente 4 der Fig. 1 und 2 gegen die Stromschiene gedrückt, so kommen primär die Kontakte 22 und im Falle der aufgebogenen Stege 20 und 21 auch diese mit der Stromschiene 1 und der Profilschiene 4 in Berührung und bilden damit eine elektrische Verbindung.

Fig. 4 zeigt eine andere Variante, bei der die Kontakte 22 nur zu einer Seite hin bogenförmig aufgewölbt sind. Selbstverständlich sind auch andere Formen von Kontaktlamellen möglich. Von wesentlichem Vorteil ist jedoch stets, daß eine Vielzahl von Kontaktpunkten vorhanden ist und die einzelnen Kontakte mit definierter Federkraft gegen die jeweiligen Flächen gedrückt werden, so daß man die gewünschte gute elektrische Verbindung erhält.

Die Laschen 4 können neben den Bohrungen 8 noch Gewindebohrungen 24 bzw. 25 aufweisen, die eine Demontage erleichtern. Die Gewindebohrungen 24 bzw. 25 gehen dabei jeweils nur durch eine Lasche eines Paares gegenüberliegender Laschen, so daß sich beim Einschrauben einer Schraube in eine der Gewindebohrungen 24 oder 25 deren vorderes Ende dann an der gegenüberliegenden Lasche abstützt und somit die beiden Laschen 4 und 4' auseinanderdrückt. Die Gewindebohrungen 24 und 25 können spiegelsymmetrisch zu einer Mittellinie 26 liegen. Selbstverständlich wäre es auch möglich, die Gewindebohrungen nur auf einer Seite, d.h. in einer Lasche anzubringen. Die Anbringung in den beiden sich gegenüberliegenden Laschen hat den Vorteil der besseren Zugänglichkeit mindestens einer der Gewindebohrungen in der Einbaulage.

## Patentansprüche

1. Stromschienenstoßlasche **gekennzeichnet durch** zwei spiegelsymmetrische Laschen (4), die ein Stromschienenprofil (1) im Bereich eines Stoßes (3) zwischen benachbarten Stromschienen (1) von außen übergreifen, wobei die Laschen (4) mit einer außerhalb des Querschnittprofiles der Stromschienen (1) liegenden Schraubverbindung (8) gegeneinander verspannbar sind und
elektrische Kontaktlamellen (18) mit einer Vielzahl von federnden Kontakten (22) zwischen den Laschen (4) und den zu verbindenden Stromschienen (1) angeordnet sind.

2. Stromschienenstoßlasche nach Anspruch 1, **dadurch gekennzeichnet,**
**daß** die Laschen eine Nut (5) aufweisen, in die ein Schenkel (6) des Stromschienenprofiles (1) eingreift und daß die Kontaktlamellen (18) in dieser Nut angeordnet sind.

3. Stromschienenstoßlasche nach Anspruch 1 oder 2, **dadurch gekennzeichnet,**
**daß** die Lasche (4) einen Kopf (7) mit einer Bohrung (8) aufweist, einen Mittelteil (9) und einen sich daran anschließenden Steg (10) mit relativ zum Mittelteil dünnem Querschnitt und daß der Mittelteil (4) und der Steg (10) gegenüber dem Stromschienenprofil (1) einen Abstand (13) aufweist.

4. Stromschienenstoßlasche nach Anspruch 3, **dadurch gekennzeichnet,**
**daß** im Übergang zwischen der Nut (5) und dem Mittelteil (9) ein Radius (14) vorhanden ist, der mit einer Schräge (15) des Stromschienenprofiles (1) in Berührung bringbar ist und damit beim Anziehen der Schraubverbindung (8) die Kontaktlamellen (18) zwischen der Unterseite (17) des Kopfes (7) verspannt.

5. Stromschienenstoßlasche nach einem der Ansprüche 1 bis 4, **dadurch gekennzeichnet,**
**daß** die Kontaktlamellen (18) in Längsrichtung der Stromschiene den Stoß (3) überbrücken und sich im wesentlichen über die gesamte Länge der Lasche (4) erstrecken.

6. Stromschienenstoßlasche nach Anspruch 5, **dadurch gekennzeichnet,**
**daß** in der Unterseite (17) des Kopfes (7) eine Ausnehmung vorhanden ist, in die die Kontaktlamellen (18) eingesetzt sind.

7. Stromschienenstoßlasche nach einem der Ansprüche 1 bis 6, **dadurch gekennzeichnet,**
**daß** die Laschen stranggepreßt oder gefräst sind.

8. Stromschienenstoßlasche nach einem der Ansprüche 1 bis 7, **dadurch gekennzeichnet,**
**daß** mindestens eine Lasche eines zusammengehörenden Paares spiegelsyaunetrischer Laschen eine Gewindebohrung (24, 25) aufweist, die den Kopf (7) der Lasche vollständig durchdringt.

## Claims

1. Conductor rail fish plate **characterized by** two mirror-inverted plates (4), which overlap the exterior of a conductor rail (1) in the region of a joint (3) between adjacent conductor rails (1), wherein the plates (4) can be tensioned against each other with a screw connection (8) on the outside of the cross-sectional profile of the conductor rails (1), and electrical contact strips (18) with a plurality of spring-loaded contacts (22) are arranged between the plates (4) and the conductor rails (1) to be connected.

2. Conductor rail fish plate according to Claim 1, **characterized in that** the plates have a groove (5), in which one leg (6) of the conductor rail profile (1) engages, and the contact strips (18) are arranged in this groove.

3. Conductor rail fish plate according to Claim 1 or 2, **characterized in that** the plate (4) has a head (7) with a hole (8), a center part (9) and a crosspiece (10) connecting to this center part with a thin cross section relative to the center part, and the center part (4) and the crosspiece (10) have a spacing (13) relative to the conductor rail profile (1).

4. Conductor rail fish plate according to Claim 3, **characterized in that** in the transition between the groove (5) and the center part (9) there is a rounded section (14), which can be brought into contact with a sloped section (15) of the conductor rail profile (1) and thus tensions the contact strips (18) between the bottom side (17) of the head (7) when tightening the screw connection (8).

5. Conductor rail fish plate according to one of Claims 1 to 4, **characterized in that** the contact strips (18) overlap the joint (3) in the longitudinal direction of the conductor rail and essentially extend over the entire length of the plate (4).

6. Conductor rail fish plate according to Claim 5, **characterized in that** in the bottom side (17) of the head (7) there is a recess, in which the contact strips (18) are inserted.

7. Conductor rail fish plate according to one of Claims 1-6, **characterized in that** the plates are extrusion molded or milled.

8. Conductor rail fish plate according to one of Claims 1-7, **characterized in that** at least one plate of a corresponding pair of mirror-inverted plates has a threaded hole (24, 25), which completely penetrates the head (7) of the plate.

## Revendications

1. Eclisse de rails conducteurs, **caractérisée par** deux éclisses (4) à symétrie miroir, qui recouvrent l'extérieur d'un profil de rail conducteur (1) dans la zone de jonction (3) entre des rails conducteurs (1) adjacents, dans laquelle les éclisses (4) peuvent être serrées l'une contre l'autre avec une liaison à vis (8) sur l'extérieur du profil en section transversale des rails conducteurs (1) et
des lamelles de contact électrique (18) avec une multiplicité de contacts élastiques (22) sont prévues entre les éclisses (4) et les rails conducteurs (1) à relier.

2. Eclisse de rails conducteurs selon la revendication 1, **caractérisée en ce que** les éclisses ont une gorge (5), dans laquelle s'engage une traverse (6) du profil de rail conducteur (1) et **en ce que** les lamelles de contact (18) sont disposées dans cette gorge.

3. Eclisse de rails conducteurs selon l'une des revendications 1 ou 2, **caractérisée en ce que** les éclisses (4) comportent une tête (7) avec un perçage (8), une pièce intermédiaire (9), et une barre (10) se raccordant à la pièce intermédiaire et ayant une section transversale mince par rapport à la pièce intermédiaire, et **en ce que** la pièce intermédiaire (4) et la barre (10) présentent un écart (13) par rapport au profil de rail conducteur (1).

4. Eclisse de rails conducteurs selon la revendication 3, **caractérisée en ce que** dans la transition entre la gorge (5) et la pièce intermédiaire (9) on prévoit un rayon (14), qui peut être mis en contact avec un chanfrein (15) du profil de rail conducteur (1) et qui met de cette façon en tension les lamelles de contact (18) entre la face inférieure (17) de la tête (7) par le serrage de la liaison à vis (8).

5. Eclisse de rails conducteurs selon l'une quelconque des revendications 1 à 4, **caractérisée en ce que** les lamelles de contact (18) franchissent la zone de jonction (3) selon la direction longitudinale du rail conducteur et s'étendent essentiellement selon la longueur totale de l'éclisse (4).

6. Eclisse de rails conducteurs selon la revendication 5, **caractérisée en ce que** dans la face inférieure (17) de la tête (7) on prévoit un évidement dans lequel sont insérées les lamelles de contact (18).

7. Eclisse de rails conducteurs selon l'une quelconque des revendications 1 à 6, **caractérisée en ce que** les éclisses sont extrudées ou usinées.

8. Eclisse de rails conducteurs selon l'une quelconque des revendications 1 à 7, **caractérisée en ce qu'**un taraudage (24, 25) est prévu dans au moins une éclisse d'une paire verrouillée d'éclisses en symétrie miroir, lequel taraudage traverse complètement la tête (7) de l'éclisse.
